# EUROPÄISCHE PATENTANMELDUNG

(11) **EP 2 026 155 A1**
(43) Veröffentlichungstag der Anmeldung: **18.02.2009**
(21) Anmeldenummer: 07015867.0
(22) Anmeldetag: 13.08.2007
(51) Int. Cl.: G05B 19/418

(54) **Drahtloser Sensor für eine Maschinensteuerung**

(71) Anmelder: Murrelektronik GmbH, 71570 Oppenweiler (DE)
(72) Erfinder: Frank, Herbert, 71570 Oppenweiler (DE)
(74) Vertreter: Wasmuth, Rolf

(57) **Zusammenfassung**

Die Erfindung betrifft eine Maschinensteuerung für eine technische Anlage, bestehend aus einer Steuerungseinheit (6), die über Signalverbindungen mit einer Vielzahl von Sensoren (7) und/oder Aktoren (8) kommuniziert. Mindestens ein Sensor (7) ist zur berührungslosen Erfassung der Lage eines am Sensor (7) vorbei bewegten Objektes (4) ausgebildet, wobei der Sensor (7) bei Annährung des Objektes (4) von einem magnetischen Feld (10) durchsetzt wird, welches im Sensor (7) ein elektrisches Signal (20) induziert, dessen Informationsgehalt über die Signalverbindung der Steuerungseinheit (6) zugeführt ist. Zur Vermeidung einer Kabelverbindung ist vorgesehen, die Signalverbindung als drahtlose Verbindung zwischen einer Sendeeinheit (14) und einer Empfangseinheit (30) auszubilden, wobei die Sendeeinheit (14) nahe dem Sensor (7) angeordnet ist und die Energieversorgung der Sendeeinheit (14) aus dem in Sensor (7) induzierten elektrischen Signal (20) abgeleitet ist.

## Beschreibung

Die Erfindung betrifft eine Maschinensteuerung für eine technische Anlage nach dem Obergriff des Anspruchs 1.

Sensoren sind bei Maschinensteuerungen fester Bestandteil der Informationstechnik. Über die Sensoren werden z. B. Positionen erfasst und diese Information über Anschlussleitungen an die übergeordneten Verteilersysteme drahtgebunden weitergegeben.

Diese Verbindungsleitungen vom Sensor zur Maschinensteuerung sind in der Praxis nicht nur mechanischen Belastungen ausgesetzt, sondern unterliegen auch beschleunigten Alterungsprozessen aufgrund der Umgebungsbedingungen. Die Leitungen müssen daher regelmäßig auf Funktion überprüft und gewartet werden.

Liegen derartige Leitungen in Kabelkanälen, Installationsrohren oder gar in Schleppketten, ist die Wartung und ein eventueller Austausch derartiger Leitungen mit hohem Aufwand verbunden.

Der Erfindung liegt die Aufgabe zugrunde, die Signalverbindung zwischen einem Sensor und der Maschinensteuerung derart auszubilden, dass der Wartungsaufwand zur Aufrechterhaltung der Signalverbindung reduziert ist.

Die Aufgabe wird erfindungsgemäß nach den kennzeichnenden Merkmalen des Anspruchs 1 gelöst.

Die Ausbildung einer drahtlosen Verbindung zwischen einer Sendeeinheit des Sensors und einer Empfangseinheit der Maschinensteuerung macht es möglich, auf drahtgebundene Verbindungen zu verzichten. Um die notwendige Energieversorgung des Sensors zu gewährleisten, ist vorgesehen, dessen Energieversorgung aus dem im Sensor induzierten elektrischen Signal abzuleiten. Der Sensor arbeitet ohne externe, leitungsgebundene Energiezuführung und Akku oder Batterie.

Um eine ausreichende elektrische Leistung zur Verfügung zu haben, hat eine im Sensor vorgesehene Induktionsspule eine ausreichende Anzahl von Windungen, so dass das induzierte elektrische Signal größer ist als bei einem bekannten Sensor, der über eine Kabelverbindung mit der Maschinensteuerung verbunden ist. Die Ableitung der elektrischen Energie aus dem induzierten Sensorsignal führt zu einem Sensor, der erst bei Auftreten eines magnetischen Flusses in der Induktionsspule, also beim Erfassen des Objektes, aktiv wird und ansonsten passiv ist.

Vorteilhaft ist die Sendeeinheit vom Gehäuse des Sensors getrennt, wobei die Sendeeinheit und der Sensor durch eine Steckverbindung zu einer Baueinheit zusammengefügt werden können. Es kann zweckmäßig sein, die Sendeeinheit im Gehäuse des Sensors zu integrieren, so dass eine kompakte, leicht montierbare Einheit gebildet ist.

Zweckmäßig ist der Sensor ortsfest an der technischen Anlage angeordnet und das magnetische Feld mit dem Objekt bewegt. In anderen Einsatzfällen kann der Sensor bewegt werden und das Feld ortsfest sein. Durch die Relativbewegung zwischen dem Sensor und dem magnetischen Feld wird in einer Spule des Sensors ein elektrisches Positionssignal des Objekts induziert. Dabei kann der Sensor ein erstes Signal abgeben, wenn das Objekt mit dem magnetischen Feld in den Erfassungsbereich des Sensors einfährt und ein zweites Signal generieren, wenn das Objekt mit dem magnetischen Feld aus dem Erfassungsbereich wieder austritt. Das Sensorsignal gibt also auch Auskunft darüber, ob das Objekt im magnetischen Feld verharrt, also stehen geblieben ist.

Das magnetische Feld kann ein elektromagnetisches Feld sein. Ist das den Sensor durchsetzende magnetische Feld ein dauermagnetisches Feld, wird am Objekt selbst keine elektrische Energie zur Erzeugung des Feldes benötigt. Der Träger für das dauermagnetische Feld ist ein handelsüblicher Dauermagnet, der z. B. am bewegten Objekt befestigt ist.

Neben der Sendeeinheit ist im Gehäuse des Sensors vorteilhaft eine Signalauswerteeinheit integriert, welche den Informationsgehalt des induzierten Signals auswertet und für eine drahtlose Sendung aufbereitet.

Es kann zweckmäßig sein, im Gehäuse des Sensors eine Energiespeichereinheit vorzusehen, deren Kapazität derart zu wählen ist, dass mindestens die zur Auswertung und Aufbereitung eines induzierten Signals erforderliche elektrische Energiemenge im Wesentlichen dauerhaft speicherbar ist. Wird die Kapazität derart gewählt, dass die gespeicherte Energie zur Auswertung, Aufbereitung und Sendung eines Informationssignals ausreichend ist, ist eine hohe Betriebssicherheit gegeben.

Um den Aufwand zur Aufbereitung des Informationsgehaltes des induzierten Signals gering zu halten, ist vorgesehen, die elektrische Energie aus dem Sensorsignal nur in einem vorgebbaren Signalabschnitt abzuleiten. Die Informationsabschnitte des Sensorsignals liegen dabei vorteilhaft außerhalb des vorgebbaren Signalabschnittes der Energiegewinnung.

In Weiterbildung der Erfindung ist die dem Sensor zugeordnete Empfangseinheit als Steckbaustein ausgebildet, in den die gesamte Empfangselektronik integriert ist. Ein derartiger Empfangssteckbaustein ist in einfacher Weise in einen Verteiler einer Maschinensteuerung einsteckbar, wie er ansonsten auch für drahtgebunden angeschlossene Sensoren verwendet wird. Der erfindungsgemäße Sensor kann somit als zusätzliches Modul innerhalb einer drahtgebundenen Anlage verwendet werden, ohne dass der Benutzer Anpassungsmaßnahmen vornehmen muss. Die im Sensorgehäuse integrierte Elektronik ist ebenso wie die im Empfangssteckbaustein angeordnete Elektronik vorteilhaft vergossen, so dass die Bauteile auch im harten praktischen Einsatz bestehen.

Weitere Merkmale der Erfindung ergeben sich aus den weiteren Ansprüchen, der Beschreibung und der Zeichnung, in der ein Ausführungsbeispiel der Erfindung schematisch wiedergegeben ist. Es zeigen:
- Fig. 1: in schematischer Darstellung eine erfindungsgemäße Maschinensteuerung an einem Transportband,
- Fig. 2: in schematischer Darstellung den inneren Aufbau eines Sensors zu der Maschinensteuerung,
- Fig. 3: eine schematische Darstellung des induzierten Spannungssignals im Sensor.

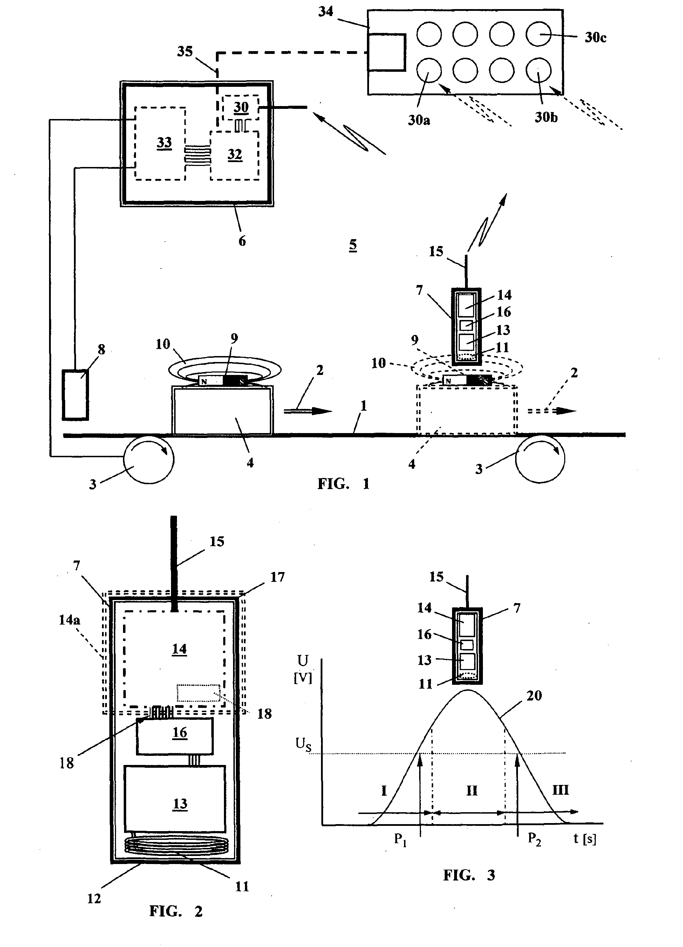

In Fig. 1 ist mit 1 ein Transportband z. B. einer Fertigungsanlage gezeigt, welches über Antriebswalzen 3 in Pfeilrichtung 2 angetrieben ist. Auf dem Transportband 1 wird ein Objekt 4 gefördert, um es z. B. einer nicht gezeigten Bearbeitungsstation oder dgl. zuzuführen.

Zur Überwachung des Transports der Objekte 4 ist eine Maschinensteuerung 5 vorgesehen, die im Wesentlichen aus einer Steuereinheit 6 und daran angeschlossenen Sensoren 7 und/oder Aktoren 8 besteht. Die Aktoren 8 dienen z. B. zum Anhalten eines Objektes 4 auf dem Transportband 1; mittels der Sensoren 7 wird die aktuelle Position des Objektes 4 innerhalb der technischen Anlage festgestellt.

Der Sensor 7 ist zur berührungslosen Erfassung der Lage eines am Sensor vorbei bewegten Objektes 4 ausgebildet, wozu im Ausführungsbeispiel das Objekt 4 einen Träger mit einem magnetischen Feld 10 aufweist. Der Träger ist als Dauermagnet 9 ausgebildet, der auf dem Objekt 4 oder dem Transportwagen des Objektes 4 befestigt ist. Im gezeigten Ausführungsbeispiel ist der Sensor 7 ortsfest in der Anlage angeordnet, wobei das Objekt 4 mit dem magnetischen Feld 10 am Sensor 7 vorbei bewegt wird. In einem anderen Einsatzfall kann es vorteilhaft sein, den Sensor mit dem Objekt zu bewegen und das elektromagnetische oder dauermagnetische Feld ortsfest vorzusehen.

Wie Fig. 2 in vergrößerter Darstellung zeigt, ist im Gehäuse 17 des Sensors 7 eine Induktionsspule 11 mit mehreren Windungen ausgebildet, die nahe dem Kopf 12 des Sensors 7 liegt. Die Induktionsspule 11 ist mit einer Signalauswerteeinheit 13 verbunden, welche vorteilhaft in dem Gehäuse 17 des Sensors 7 integriert ist und welche den Informationsgehalt des induzierten Signals 20 (Fig. 3) auswertet und für die Weiterverarbeitung aufbereitet. Nahe des Sensors 7 ist eine Sendeeinheit 14 vorgesehen, die über eine Antenne 15 das von der Signalauswerteeinheit 13 aufbereitete Sendesignal abstrahlt. Die Antenne 15 kann eine Außenantenne wie in Fig. 2 gezeigt sein; es kann zweckmäßig sein, die Antenne 15 innerhalb des Gehäuses 17 des Sensors 7 vorzusehen.

In einem ersten Ausführungsbeispiel wird die Sendeeinheit 14 als vom Sensor 7 getrennte Baueinheit 14a (Fig. 2) ausgeführt, die über eine Steckverbindung 18 mit dem Sensor 7 verbindbar ist. Ist als Steckverbindung 18 eine elektrische Steckverbindung vorgesehen, werden beim Zusammenfügen auch alle notwendigen elektrischen Verbindungen hergestellt. In einem weiteren Ausführungsbeispiel (Fig. 1, 3) ist die Sendeeinheit 14 bevorzugt innerhalb des Gehäuses 17 des Sensors 7 angeordnet.

Das von der Sendeeinheit 14 abgestrahlte Signal wird in einer Empfangseinheit 30 empfangen, wozu die Empfangseinheit 30 eine Empfangsantenne 31 aufweist. Die Empfangseinheit 30 gibt das empfangene Signal an eine Verarbeitungseinheit 32 weiter, welche die empfangene Information auswertet und dann an eine Steuerelektronik 33 weitergibt. Die Steuerelektronik 33 steuert z. B. Aktoren 8, die Drehzahl der Antriebswalzen 3 zur Einstellung der Geschwindigkeit des Transportbandes 1 oder andere Regel- oder Steuereinheiten.

Der Sensor 7 ist in seiner ortsfest montierten Lage innerhalb der technischen Anlage zunächst inaktiv. Wird ein Objekt 4 auf den Sensor 7 zu bewegt, durchsetzt das magnetische Feld 10 des Objektes 4 die Induktionsspule 11 zunächst schwach und dann immer stärker, bis das Objekt 4 in der gestrichelten Lage unterhalb des Sensors 7 (Fig. 1) liegt. In dieser Lage ist der magnetische Fluss in der Induktionsspule 11 am größten. Beim Weitertransport nimmt der magnetische Fluss in der Induktionsspule 11 wieder ab, so dass sich ein Induktionssignal 20 ergibt, wie es in Fig. 3 dargestellt ist.

Dieses Induktionssignal 20 wird von der Signalauswerteeinheit 13 in zweifacher Hinsicht ausgewertet. So kann das Signal 20 zunächst in seiner absoluten Größe überwacht werden, um bei Überschreiten eines Schwellwertes U_{S} ein erstes Positionssignal P₁ und bei Unterschreiten des Schwellwertes U_{S} ein zweites Positionssignal P₂ zu generieren. Diese Positionssignale P₁, P₂ werden in der Steuereinheit 6 der technischen Anlage ausgewertet und geben die exakte Lage des Objektes 4 zu einem Zeitpunkt t₁ auf dem Transportband 1 wieder. Dieser Informationsgehalt fließt in die Maschinensteuerung ein, um die technische Anlage mit den bewegten Objekten 4 im Rahmen einer Fertigung, einer Verpackung, einer Montage oder dgl. zu steuern. Bleibt das Objekt 4 zwischen den Positionen P₁ und P₂ stehen, ist der Zustand "1" in der Empfangseinheit 6 gespeichert. Wenn das bewegte Objekt 4 aus dem magnetischen Feld herausfährt, sendet die Sendeeinheit 14 ein zweites Signal, schaltet die Empfangseinheit 6 auf den Zustand "0" und meldet dies der Steuerung. Somit gibt die Sendeeinheit 14 bei Eintritt des Sensors 7 in ein magnetisches Feld 10 ein erstes Signal und bei Austritt aus dem magnetischen Feld 10 ein zweites Informationssignal ab. Ein Stehenbleiben des Objekts 4 im Erfassungsbereich kann erkannt werden.

Im gezeigten Ausführungsbeispiel ist der Sensor 7 anlagenfest vorgesehen, während das magnetische Feld 10 zusammen mit dem Objekt 4 bewegt wird. Grundsätzlich ist es auch möglich, den Sensor am Objekt 4 und das magnetische Feld 10 anlagenfest vorzusehen.

Zweckmäßig ist das magnetische Feld ein Dauermagnetfeld, so dass aufgrund der Relativbewegung zwischen dem Sensor 7 und dem magnetischen Feld 10 entsprechend dem Induktionsgesetz das elektrische Signal 20 in der Spule 11 des Sensors 7 induziert wird. Es kann auch zweckmäßig sein, anstelle eines dauermagnetischen Feldes ein Wechselfeld vorzusehen; der Aufwand zum Ausfiltern des Informationsgehaltes kann dann aber größer sein.

Neben der Auswertung des Informationsgehaltes des Spannungssignals 20 wird das Spannungssignal 20 zur elektrischen Versorgung des Sensors 7 genutzt. Der Sensor 7 arbeitet ohne externe leitungsgebundene Energiezuführung und ohne Akku oder Batterie. Die gesamte Energieversorgung der Signalauswerteeinheit 13 und der Sendeeinheit 14 wird aus dem induzierten Spannungssignal 20 abgeleitet. Dabei kann es vorteilhaft sein, die zum Betrieb des Sensors 7 notwendige elektrische Energie in einem vorgebbaren Signalabschnitt II (Fig. 3) des induzierten elektrischen Signals 20 abzugreifen, während in den anderen Signalabschnitten I und III ausschließlich ein Ausfiltern des Informationsgehaltes vorgesehen ist. Im gezeigten Ausführungsbeispiel liegt der Signalabschnitt II, der zur Energiegewinnung genutzt wird, zwischen den Positionssignalen P₁ und P₂.

Der zunächst inaktive Sensor 7 wird somit dann aktiv, wenn ein magnetisches Feld 10 an ihm vorbei bewegt wird. Das dabei induzierte Spannungssignal 20 dient der elektrischen Versorgung des Sensors 7 und damit dessen Aktivierung. Dabei steht mit Beginn des induzierten Spannungssignals 20 bereits Energie zur Verfügung, um z. B. den Schwellwertvergleich zur Ermittlung des Positionssignals P₁ vorzunehmen. Die für die Sendeleistung notwendige Energie steht spätestens dann zur Verfügung, wenn das induzierte Spannungssignal 20 abfällt oder weitgehend abgeklungen ist.

Das gesendete Informationssignal wird von der Empfangseinheit 30 empfangen und entsprechend verarbeitet.

In Weiterbildung der Erfindung ist vorgesehen, dass die einem Sensor 7 zugeordnete Empfangseinheit 30 als Steckbaustein 30a, 30b, 30c ausgebildet ist, der in einen Verteiler 34 der Maschinensteuerung 5 einsteckbar ist. Ein derartiger Verteiler 34 ist z. B. über einen Datenbus 35 mit der Verarbeitungseinheit 32 verbunden, so dass mehrere in der technischen Anlage angeordnete Sensoren 7 in einfacher Weise an die Steuereinheit 6 angeschlossen werden können.

Es kann zweckmäßig sein, in dem Gehäuse 17 des Sensors 7 eine Energiespeichereinheit 16 vorzusehen, in der die aus einem Spannungssignal 20 abgeleitete Energie gespeichert wird. Vorteilhaft ist die Induktionsspule 11 derart dimensioniert, dass der Energiegehalt des induzierten Signals 20 deutlich größer ist, als die zum Betrieb des Sensors 7 und dessen Sendeeinheit notwendige elektrische Leistung. Vorteilhaft ist die Energiespeichereinheit 16 von der Kapazität derart gewählt, dass sie zumindest die zur Auswertung und Aufbereitung eines induzierten Spannungssignals 20 erforderliche elektrische Energiemenge dauerhaft speichert. Damit kann erreicht werden, dass vor Auftritt eines magnetischen Flusses in der Induktionsspule 11 der Sensor 7 die Signalauswerteeinheit startet, so dass diese mit Beginn des Signals 20 bereits betriebsbereit ist. Es kann zweckmäßig sein, die Kapazität der Energiespeichereinheit 16 derart zu wählen, dass die in ihr gespeicherte Energie zur Auswertung, Aufbereitung und Sendung eines Informationssignals ausreichend ist.

In Weiterbildung der Erfindung wird der ausgewertete Informationsgehalt des induzierten Signals 20 für einen vorgebbaren Zeitraum in einem Speicher 18 gespeichert, der z. B. als Eingangsspeicher der Sendeeinheit 14 ausgebildet sein kann. Dieser im Sensorgehäuse 17 vorhandene Speicher 18 kann dazu genutzt werden, das Informationssignal mehrfach zu senden, so dass eine sichere drahtlose Übertragung des Informationsgehaltes von der Sendeeinheit 14 zur Empfangseinheit 30 gewährleistet ist.

## Patentansprüche

1. Maschinensteuerung für eine technische Anlage, bestehend aus einer Steuerungseinheit (6), die über Signalverbindungen mit einer Vielzahl von Sensoren (7) und/oder Aktoren (8) kommuniziert, mit mindestens einem Sensor (7) zur berührungslosen Erfassung der Lage eines am Sensor (7) vorbei bewegten Objektes (4), wobei der Sensor (7) bei Annährung des Objektes (4) von einem magnetischen Feld (10) durchsetzt wird, welches im Sensor (7) ein elektrisches Signal (20) induziert, dessen Informationsgehalt über die Signalverbindung der Steuerungseinheit (6) zugeführt ist,
**dadurch gekennzeichnet, dass** die Signalverbindung eine drahtlose Verbindung zwischen einer Sendeeinheit (14) und einer Empfangseinheit (30) ist, dass die Sendeeinheit (14) nahe dem Sensor (7) angeordnet ist, und dass die Energieversorgung der Sendeeinheit (14) aus dem im Sensor (7) induzierten elektrischen Signal (20) abgeleitet ist.

2. Maschinensteuerung nach Anspruch 1,
**dadurch gekennzeichnet, dass** die Sendeeinheit (14) als vom Sensor (7) getrennte Baueinheit (14a) ausgeführt ist.

3. Maschinensteuerung nach Anspruch 2,
**dadurch gekennzeichnet, dass** die Baueinheit (14a) mit dem Sensor (7) über eine vorzugsweise elektrische Steckverbindung (18) verbindbar ist.

4. Maschinensteuerung nach Anspruch 1,
**dadurch gekennzeichnet, dass** die Sendeeinheit (14) im Gehäuse (17) des Sensors (7) integriert ist.

5. Maschinensteuerung nach einem der Ansprüche 1 bis 4,
**dadurch gekennzeichnet, dass** der Sensor (7) ortsfest angeordnet ist und das magnetische Feld (10) mit dem Objekt (4) bewegt ist.

6. Maschinensteuerung nach einem der Ansprüche 1 bis 5,
**dadurch gekennzeichnet, dass** die Relativbewegung zwischen dem Sensor (7) und dem magnetischen Feld (10) das elektrische Signal (20) in einer Spule (11) des Sensors (7) induziert.

7. Maschinensteuerung nach einem der Ansprüche 1 bis 6,
**dadurch gekennzeichnet, dass** das magnetische Feld (10) ein dauermagnetisches Feld ist.

8. Maschinensteuerung nach Anspruch 7,
**dadurch gekennzeichnet, dass** das dauermagnetische Feld von einem Dauermagneten (9) erzeugt ist, der am bewegten Objekt (4) befestigt ist.

9. Maschinensteuerung nach einem der Ansprüche 1 bis 7,
**dadurch gekennzeichnet, dass** im Gehäuse (17) des Sensors (7) eine Signalauswerteeinheit (13) integriert ist, welche den Informationsgehalt des induzierten Signals (20) auswertet und für eine Sendung über die Sendeeinheit (14) aufbereitet.

10. Maschinensteuerung nach einem der Ansprüche 1 bis 9,
**dadurch gekennzeichnet, dass** der Sensor (7) eine vorzugsweise im Gehäuse (17) des Sensors (7) angeordnete Energiespeichereinheit (16) aufweist.

11. Maschinensteuerung nach Anspruch 10,
**dadurch gekennzeichnet, dass** die Kapazität der Energiespeichereinheit (16) derart gewählt ist, dass mindestens die zur Auswertung und Aufbereitung eines induzierten Signals (20) erforderliche elektrische Energiemenge dauerhaft gespeichert ist.

12. Maschinensteuerung nach Anspruch 10 oder 11,
**dadurch gekennzeichnet, dass** die Kapazität derart gewählt ist, dass die gespeicherte Energie zur Auswertung, Aufbereitung und Sendung eines Informationssignals ausreichend ist.

13. Maschinensteuerung nach einem der Ansprüche 1 bis 12,
**dadurch gekennzeichnet, dass** der Informationsgehalt des induzierten Signals (20) für einen vorgebbaren Zeitraum in einem Speicher (18) speicherbar ist, wobei der Speicher (18) vorzugsweise im Sensorsgehäuse (17) vorgesehen ist.

14. Maschinensteuerung nach einem der Ansprüche 1 bis 13,
**dadurch gekennzeichnet, dass** die Ableitung der zum Betrieb des Sensors (7) notwendigen elektrischen Energie in einem vorgebbaren Signalabschnitt (II) des induzierten elektrischen Signals (20) erfolgt.

15. Maschinensteuerung nach Anspruch 14,
**dadurch gekennzeichnet, dass** die Informationsabschnitte (I, III) des Sensorsignals (20) außerhalb des vorgebbaren Signalabschnitts (II) zur Energiegewinnung liegen.

16. Maschinensteuerung nach einem der Ansprüche 1 bis 15,
**dadurch gekennzeichnet, dass** die einem Sensor (7) zugeordnete Empfangseinheit (30) als Steckbaustein (30a, 30b, 30c) ausgebildet ist, der in einen Verteiler (34) einer Maschinensteuerung (5) einsteckbar ist.

17. Maschinensteuerung nach Anspruch 16,
**dadurch gekennzeichnet, dass** der Verteiler (34) an einen Datenbus (35) angeschlossen ist.

18. Maschinensteuerung nach einem der Ansprüche 1 bis 17,
**dadurch gekennzeichnet, dass** die Sendeeinheit (14) bei Eintritt des Sensors (7) in ein magnetisches Feld (10) und bei Austritt aus dem magnetischen Feld (10) ein Informationssignal sendet.
